# EUROPEAN PATENT APPLICATION

(11) **EP 4 790 533 A1**
(43) Date of publication of application: **12.08.2026**
(21) Application number: 24917345.1
(22) Date of filing: 08.01.2024
(51) Int. Cl.: G06F 3/04842, G06F 3/04886

(54) **DISPLAY DEVICE AND OPERATION METHOD THEREOF**

(71) Applicant: LG Electronics Inc., Yeongdeungpo-gu Seoul 07336 (KR)
(72) Inventor: LIM, Kyu Man, Seoul 06772 (KR); LEE, Hyung Joon, Seoul 06772 (KR)
(74) Representative: Schott, Jakob Valentin
(86) International application number: PCT/KR2024/000348
(87) International publication number: WO 2025/150579

(57) **Abstract**

A display device according to an embodiment of the present disclosure may include a display that displays a search screen including an input field and a first input window representing a virtual keyboard input window, and a controller that switches the first input window to a second input window including one or more recommended keywords when an external device is connected and an input signal is received from the external device.

## Description

### Technical Field

The present disclosure relates to a display device, and more particularly, to a display device that changes a form of an input window according to a signal received from a text input device.

### Background Art

Digital TV services using wired or wireless communication networks are becoming widespread. Digital TV services can provide various services that were not possible with conventional analog broadcasting services.

For example, IPTV (Internet Protocol Television) and smart TV services, which are types of digital TV services, provide interactivity that allows users to actively select the type of programs to watch, viewing times, and the like. IPTV and smart TV services may also provide various additional services based on such interactivity, such as Internet search, home shopping, and online games.

A conventional TV displays a virtual keyboard input window and receives an input for a virtual key included in the virtual keyboard input window according to an input signal received from an external device such as a text input device.

That is, when a text input device is connected, a conventional TV only discloses a configuration in which a virtual keyboard input window on the screen disappears, which has limitations in the utilization of the input of the text input device.

### Technical Problem

An object of the present disclosure is to automatically hide a virtual keyboard input window and provide recommended keywords when a user inputs through a physical keyboard while the virtual keyboard input window on the screen is activated.

An object of the present disclosure is to, when a text input is received from a text input device, provide recommended keywords instead of a virtual keyboard input window so that a search query can be automatically entered into an input field.

### Technical Solution

A display device according to an embodiment of the present disclosure may include a display that displays a search screen including an input field and a first input window representing a virtual keyboard input window, and a controller that, when the external device is connected and an input signal is received from the external device, switches the first input window to a second input window including one or more recommended keywords.

A method of operating a display device according to an embodiment of the present disclosure may include displaying a search screen including an input field and a first input window representing a virtual keyboard input window, receiving an input signal from the external device, and switching the first input window to a second input window including one or more recommended keywords.

### Advantageous Effects

According to an embodiment of the present disclosure, a user can receive a plurality of recommended keywords with a simple key input operation, and can easily select any one of the plurality of recommended keywords. Accordingly, there is no need to perform a separate key input in the input field, and the convenience of searching can be greatly improved.

### Description of Drawings

FIG. 1 is a block diagram illustrating a configuration of a display device according to an embodiment of the present disclosure.
FIG. 2 is a diagram illustrating an input system according to an embodiment of the present disclosure.
FIG. 3 is a flowchart for illustrating an operating method of a display device according to an embodiment of the present disclosure.
FIG. 4A is a diagram illustrating an example of switching a first input window to a second input window based on an input signal received from a text input device according to an embodiment of the present disclosure.
FIG. 4B is a diagram illustrating an example of switching a second input window back to a first input window based on an input signal received from a text input device according to an embodiment of the present disclosure.
FIG. 4C is a diagram illustrating an example of switching a first input window to a third input window based on an input signal received from a text input device according to an embodiment of the present disclosure.
FIG. 5A and FIG. 5B are diagrams illustrating an example in which a transparency of a first input window is adjusted according to the number of characters input into an input field according to an embodiment of the present disclosure.
FIG. 6A and FIG. 6B are diagrams illustrating that recommended keywords vary according to a type of an input field.

### Mode for Invention

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

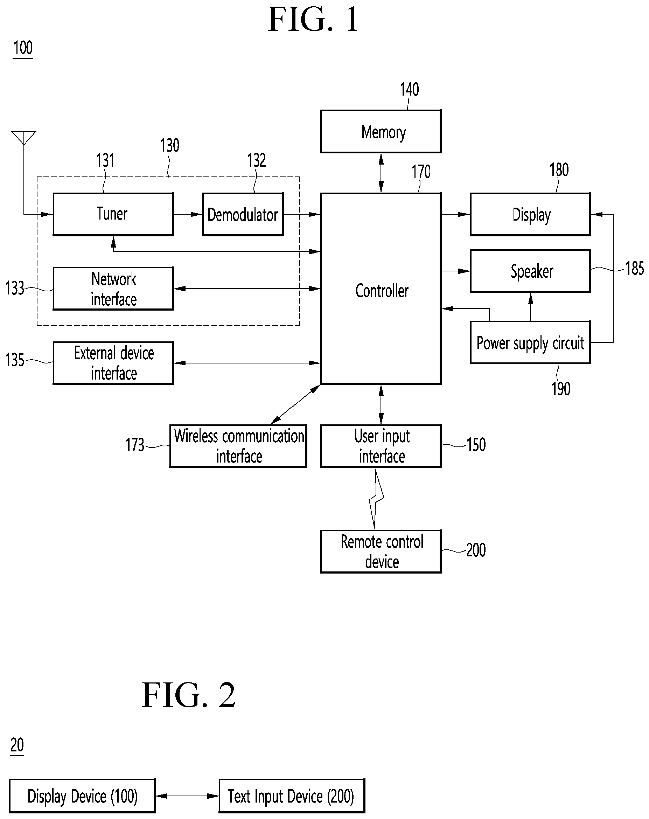

FIG. 1 is a block diagram illustrating a configuration of a display device according to an embodiment of the present disclosure.

Referring to FIG. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list from an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a settop box, a Blu-ray player, a DVD player, a game console, a sound bar, a smartphone, a PC, a USB memory, and a home theater system but this is just exemplary.

The network interface 133 may provide an interface for connecting the display device 100 to a wired/wireless network including internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (UWB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Radio Frequency Identification (RFID), Infrared Data Association (IrDA), Ultra Wideband (UWB), ZigBee, Near Field Communication (NFC), WirelessFidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, when the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or image signals or data signals, which are received in the external device interface 135, into R, G, and B signals to generate driving signals.

Furthermore, the display device 100 illustrated in FIG. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display 180 and the speaker 185.

FIG. 2 is a diagram illustrating an input system according to an embodiment of the present disclosure.

Referring to FIG. 2, an input system 20 may include a display device 100 and a text input device 200.

The display device 100 may be connected to an external device, and the external device may be the text input device 200.

The text input device 200 may transmit an input signal for text input to the display device 100.

The text input device 200 may be an input device capable of inputting text, such as a keyboard or a remote control.

The text input device 200 may transmit an input signal to the display device 100 through wired or wireless communication.

The text input device 200 may be connected to the display device 100 through the external device interface 135 of the display device 100.

The text input device 200 may be connected to the display device 100 through the user input interface 150 or the wireless communication interface 173.

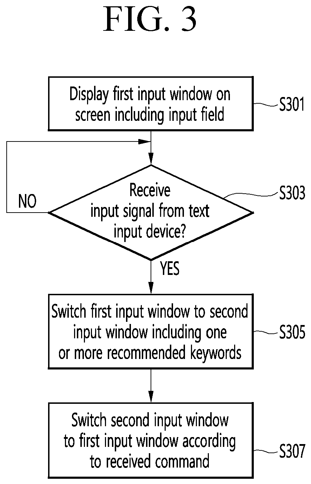

FIG. 3 is a flowchart for illustrating an operating method of a display device according to an embodiment of the present disclosure.

**The controller 170 of the display device 100 displays a first input window on the display 180 on a screen including an input field (S301).**

In one embodiment, the screen may be a search screen.

As one example, the search screen may be a screen of a website that provides a search function.

As another example, the search screen may be an execution screen of an application that provides a search function.

The input field may be a field for inputting a search query. The input field may be a search window that displays characters based on a signal received from the text input device 200.

The first input window may be a virtual keyboard input window. The virtual keyboard input window may include a plurality of virtual keys for key input.

**The controller 170 may determine whether an input signal is received from the text input device 200 (S303).**

In one embodiment, the input signal may be an input signal for inputting text or characters into the input field of the screen. The input signal may be a key input signal for selecting one of a plurality of virtual keys included in the first input window.

A key input signal first input upon connection with the text input device 200 may be used as a trigger for causing the first input window to disappear. Accordingly, a character corresponding to the first key input signal may not be displayed in the input field.

In other words, the controller 170 may recognize a first key input corresponding to the first key input after the text input device 200 is connected as a trigger for causing the first input window to disappear.

In another embodiment, the input signal may be a connection signal indicating that the text input device 200 is connected to the display device 100. The input signal may be a detection signal indicating that the text input device 200 is connected to the display device 100.

**When the controller 170 determines that an input signal has been received from the text input device 200, the controller 170 may switch the first input window to a second input window including one or more recommended keywords (S305).**

Based on determining that an input signal has been received from the text input device 200, the controller 170 may cause the first input window to disappear and display the second input window on the display 180.

The second input window may be displayed at the position where the first input window was displayed, or may be displayed at a position different from the position where the first input window was displayed.

The second input window may include one or more recommended keywords.

In one embodiment, the recommended keyword may be a keyword including a character represented by the input signal received from the text input device 200.

In another embodiment, the recommended keyword may be a keyword stored in the memory 140 of the display device 100. Specifically, the recommended keyword may be a keyword generated based on log data of the user.

The log data of the user may include one or more of a search history such as words frequently searched by the user, a viewing history of the user, and a preferred genre of the user.

The one or more recommended keywords included in the second input window may include keywords with a frequency equal to or greater than a predetermined frequency among search queries searched by the user.

The one or more recommended keywords included in the second input window may be selected through a preset key among a plurality of virtual keys provided in the text input device 200. The preset key may be a special key included in the plurality of virtual keys, but this is only exemplary. Each of the one or more recommended keywords may be matched to a preset virtual key.

In another embodiment, the recommended keyword may vary according to the type of the input field. The type of the input field may be any one of a text type, a URL type, an email type, and a phone number type.

**The controller 170 may switch the second input window to the first input window according to a received command (S307).**

In one embodiment, the second input window may include an icon in the shape of a keyboard, and the controller 170 may switch the second input window to the first input window according to a command to select the icon.

In another embodiment, the controller 170 may switch the second input window to the first input window according to a command to delete all characters entered in the input field.

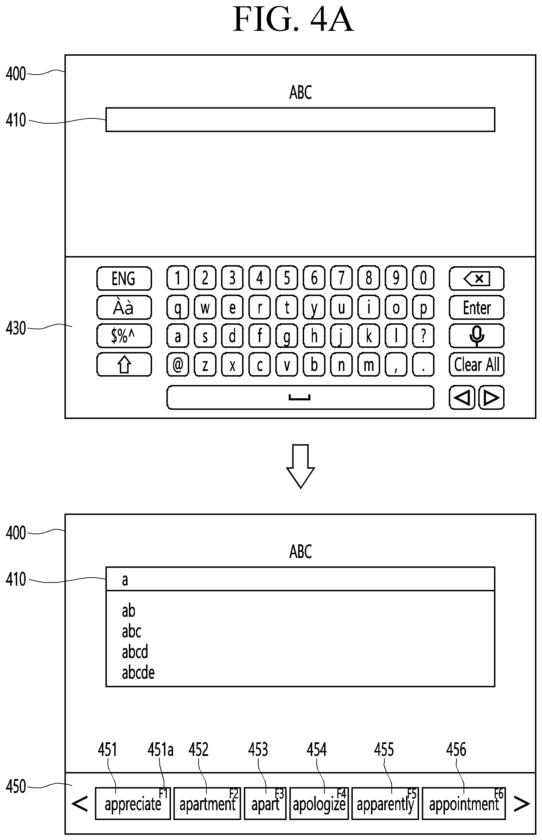

FIG. 4A is a diagram illustrating an example of switching the first input window to the second input window based on an input signal received from the text input device according to an embodiment of the present disclosure.

Referring to FIG. 4A, a search screen 400 of a website for searching is illustrated.

The search screen 400 may be displayed on the display 180 of the display device 100.

The search screen 400 may include an input field 410 and a first input window 430. The search screen 400 may further include content of an accessed website.

The first input window 430 may be a virtual keyboard input window including a plurality of virtual keys. The plurality of virtual keys may correspond to a plurality of keys provided in a physical keyboard.

The controller 170 may switch the first input window 430 to a second input window 450 based on an input signal received from the text input device 200 while displaying the first input window 430. Here, the input signal may be a signal for selecting a virtual key "a" included in the first input window 430. According to the signal for selecting the virtual key "a", a character "a" may be displayed on the input field 410.

The controller 170 may switch the first input window 430 to the second input window 450 based on receiving a signal for selecting the virtual key "a" from the text input device 200.

A size of an area occupied by the second input window 450 may be smaller than a size of an area occupied by the first input window 430.

The second input window 450 may include a plurality of recommended keywords 451 to 456.

In one embodiment, each of the plurality of recommended keywords 451 to 456 may be a keyword starting with the character "a" displayed in the input field 410.

A special key identifier corresponding to a special key may be displayed on one side of each of the plurality of recommended keywords 451 to 456. For example, a special key identifier F1 (451a) may be displayed on one side of the first recommended keyword 451. F1 (451a) may be an identifier for selecting the first recommended keyword 451.

A user may select the first recommended keyword 451 by selecting the F1 key among a plurality of keys provided in the text input device 200.

The controller 170 may select the first recommended keyword 451 upon receiving a selection signal for selecting the F1 key from the text input device 200. The controller 170 may automatically display the selected first recommended keyword 451 in the input field 410. The controller 170 may display, on the display 180, a search result for the first recommended keyword 451 according to a search command.

As another example, the controller 170 may perform a search for the first recommended keyword 451 after displaying the first recommended keyword 451 in the input field 410 according to a signal for selecting the first recommended keyword 451.

The special key may be F1 to FN, but is not limited thereto and may also be a general numeric key or character key.

As described above, according to an embodiment of the present disclosure, a user can receive a plurality of recommended keywords with a simple key input operation, and can easily select any one of the plurality of recommended keywords.

Accordingly, there is no need to perform a separate key input in the input field, and the convenience of searching can be greatly improved.

In addition, when a key is input through the text input device 200, the size of the first input window 410 is reduced, so the area of the search screen 400 that the user can perceive can be expanded.

Meanwhile, the first input window 450 may further include a special virtual key for a special operation in addition to the recommended keywords 451 to 456. The special function key may include a voice recognition key for activating voice recognition.

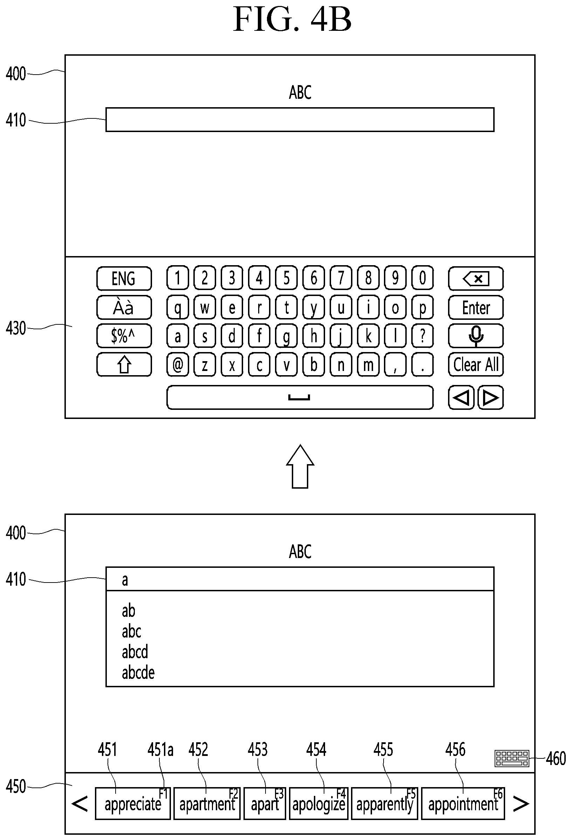

FIG. 4B is a diagram illustrating an example of switching the second input window back to the first input window based on an input signal received from the text input device according to an embodiment of the present disclosure.

Referring to FIG. 4B, the controller 170 may further display an icon 460 on the search screen 400 in addition to the second input window 450. The icon 460 may be an item for switching the second input window 450 back to the first input window 430. The icon 460 may have a keyboard shape, but this is only exemplary.

The icon 460 may be displayed on one side of the second input window 450, or may be displayed included in the second input window 450.

The controller 170 may switch the second input window 450 back to the first input window 430 based on a command to select the keyboard icon 460.

A specific key provided in the text input device 200 may be assigned to the icon 460. When the controller 170 receives a command to select the specific key from the text input device 200, the controller 170 may determine that the icon 460 has been selected. Based on the icon 460 being selected, the controller 170 may switch the second input window 450 to the first input window 430.

In another embodiment, the controller 170 may switch the second input window 450 to the first input window 430 upon receiving a command to select a specific key included in the second input window 450.

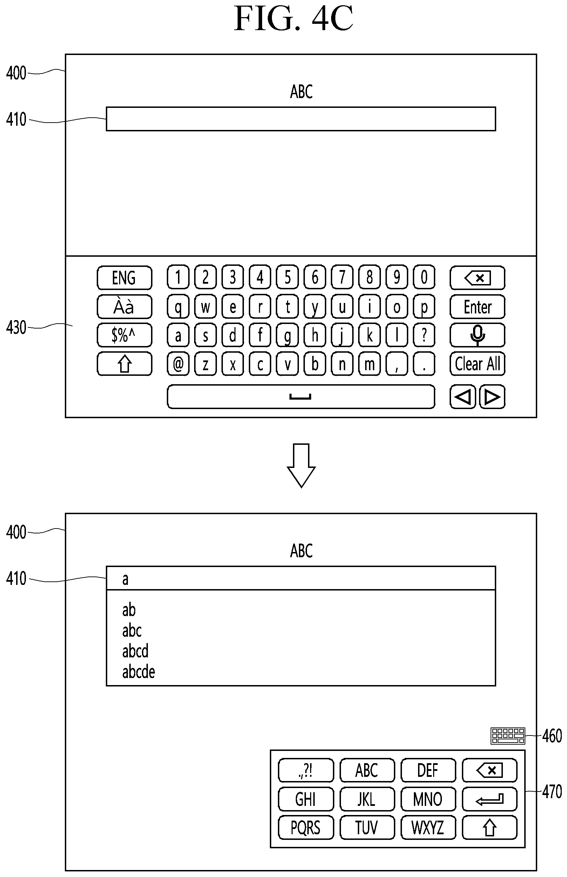

FIG. 4C is a diagram illustrating an example of switching the first input window to a third input window based on an input signal received from the text input device according to an embodiment of the present disclosure.

Referring to FIG. 4C, the controller 170 may switch the first input window 430 to a third input window 470 based on receiving a signal for selecting the virtual key "a" from the text input device 200.

The third input window 470 may also be a virtual keyboard input window, but may have fewer virtual keys than the first input window 430.

A size of an area occupied by the third input window 470 may be larger than a size of an area occupied by the second input window 450, and may be smaller than a size of an area occupied by the first input window 430.

In addition, when a key is input through the text input device 200, the function of the first input window 410 is reduced, so the area of the search screen 400 that the user can perceive can be expanded.

Meanwhile, the controller 170 may further display an icon 460 on one side of the third input window 470 or included in the third input window 470.

The controller 170 may switch the third input window 470 back to the first input window 430 upon receiving a command to select the icon 460 from the text input device 200.

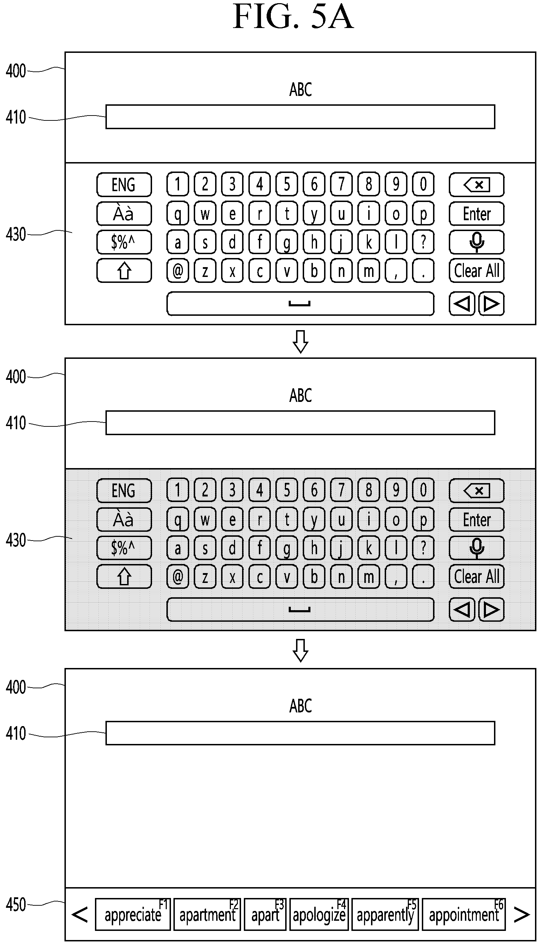

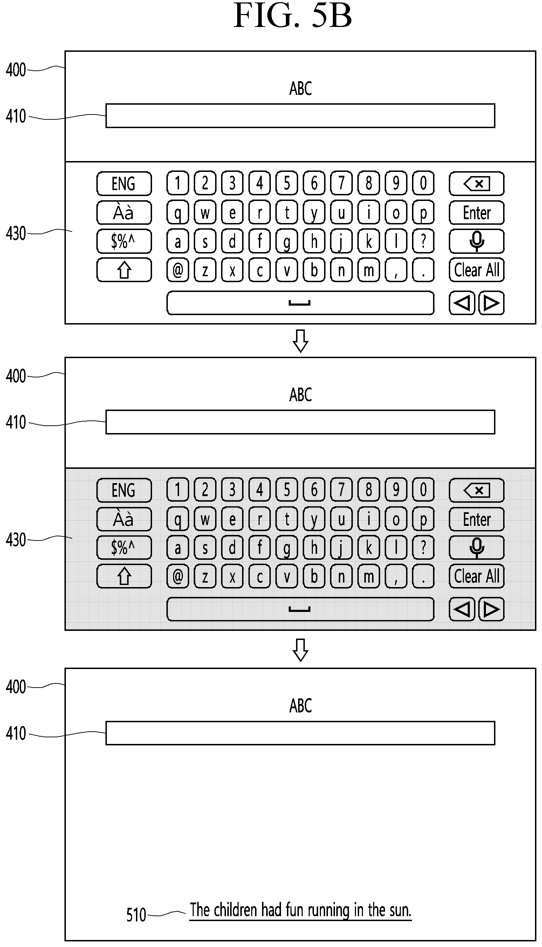

FIG. 5A and FIG. 5B are diagrams illustrating an example in which the transparency of the first input window is adjusted according to the number of characters input into the input field according to an embodiment of the present disclosure.

The controller 170 may increase the transparency of the first input window 430 as the number of characters input based on the input signal received from the text input device 200 increases.

Referring to FIG. 5A, the controller 170 may adjust the transparency of the first input window 430 to 25% based on a first input signal for inputting a first character received from the text input device 200.

The controller 170 may adjust the transparency of the first input window 430 to 50% based on a second input signal for inputting a second character received from the text input device 200.

The controller 170 may adjust the transparency of the first input window 430 to 75% based on a third input signal for inputting a third character received from the text input device 200.

The controller 170 may adjust the transparency of the first input window 430 to 100% based on a fourth input signal for inputting a fourth character received from the text input device 200. The controller 170 may display the second input window 450 on the display 180 at the same time as adjusting the transparency of the first input window 430 to 100%.

As another example, as illustrated in FIG. 5B, the controller 170 may not display the second input window 450 while adjusting the transparency of the first input window 430 to 100%. Accordingly, the content 510 of the search screen 400 that was covered by the first input window 430 may be exposed.

Meanwhile, as illustrated in FIG. 5B, when the controller 170 receives an input signal for deleting the characters entered in the input field 410 from the text input device 200 in a state where the first input window 430 has disappeared, the controller 170 may decrease the transparency of the first input window 430. When all the characters entered in the input field 410 have been deleted, the controller 170 may adjust the transparency of the first input window 430 to 0%.

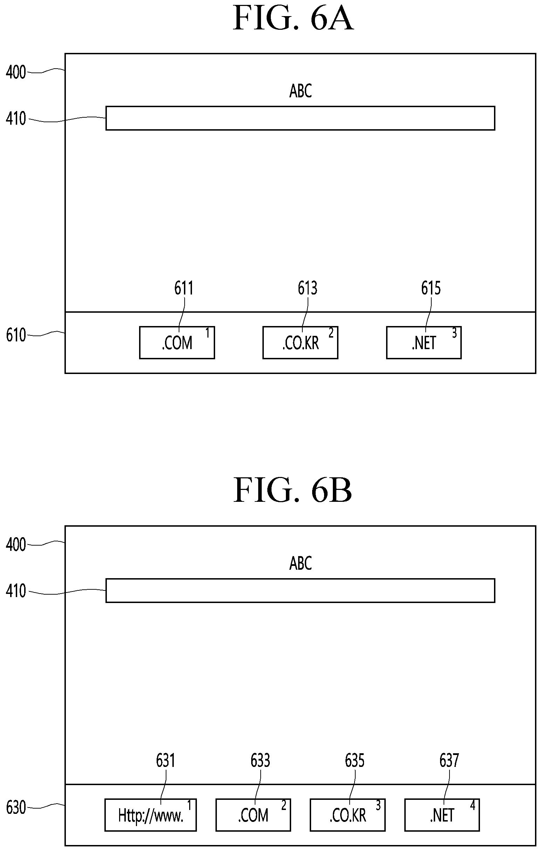

FIG. 6A and FIG. 6B are diagrams illustrating that recommended keywords vary according to the type of the input field.

Referring to FIG. 6A, the controller 170 may display the second input window 610 on the search screen 400 based on an input signal received from the text input device 200.

In FIG. 6A, the type of the input field 410 may be an email type used for entering an email address.

When the type of the input field 410 is the email type, the second input window 610 may include a plurality of email domains 611, 613, 615 for identifying the domain of an email address.

A specific number may be assigned to each of the plurality of domains 611, 613, 615. The controller 170 may select a corresponding domain according to an input signal for selecting a specific number received from the text input device 200. Characters corresponding to the selected domain may be entered into the input field 410.

In FIG. 6B, the type of the input field 410 may be a URL (Uniform Resource Locator) type used for entering a URL.

The plurality of domains 611, 613, 615 may vary in form from country to country.

When the type of the input field 410 is the URL type, the second input window 610 may include a plurality of web domains 631, 633, 635, 637 for identifying the domain of a website.

A specific number may be assigned to each of the plurality of web domains 631, 633, 635, 637. The controller 170 may select a corresponding domain according to an input signal for selecting a specific number received from the text input device 200. Characters corresponding to the selected domain may be entered into the input field 410.

The plurality of web domains 631, 633, 635, 637 may vary in form from country to country.

According to one embodiment of the present disclosure, the above-described method can be implemented as a code readable by a processor on a medium on which a program is recorded. Examples of a medium readable by the processor include ROM, RAM, CD-ROM, magnetic tape, floppy disk, and optical data storage device.

The display device described above is not limited to applying the configurations and methods of the described embodiments in a limited manner, and all or some of the embodiments may be selectively combined so that various modifications may be made to the embodiments.

## Claims

1. A display device, comprising:
a display configured to display a search screen including an input field and a first input window representing a virtual keyboard input window; and
a controller configured to switch the first input window to a second input window including one or more recommended keywords when an external device is connected and an input signal is received from the external device.

2. The display device of claim 1, wherein the input signal is a signal for inputting text into the input field of the search screen.

3. The display device of claim 2, wherein the controller is configured to switch the first input window to the second input window without displaying the text according to the input signal.

4. The display device of claim 1, wherein the input signal is a signal indicating that the external device is connected to the display device.

5. The display device of claim 1, wherein each of the one or more recommended keywords is matched to a preset key, and the controller is configured to select a recommended keyword matched to the preset key according to a selection of the preset key and display the selected recommended keyword on the input field.

6. The display device of claim 2, wherein the controller is configured to adjust a transparency of the first input window according to the input signal received from the external device.

7. The display device of claim 6, wherein the controller is configured to increase the transparency of the first input window as the number of the text increases according to the input signal.

8. The display device of claim 1, wherein the controller is configured to switch the second input window to the first input window upon receiving a command to select a specific key included in the second input window.

9. The display device of claim 1, wherein each of the one or more recommended keywords is a keyword including a character represented by the input signal.

10. The display device of claim 1, wherein each of the one or more recommended keywords is a keyword based on log data of a user, and the log data is data based on one of a search history and a viewing history of the user.

11. The display device of claim 1, wherein each of the one or more recommended keywords varies according to a type of the input field.

12. The display device of claim 11, wherein the type of the input field is any one of a URL type, an email type, a phone number type, and a text type.

13. The display device of claim 1, wherein a size of an area occupied by the second input window is smaller than a size of an area occupied by the first input window.

14. The display device of claim 1, further comprising an external device interface configured to receive the input signal from the external device.

15. A method of operating a display device, comprising:
displaying a search screen including an input field and a first input window representing a virtual keyboard input window;
receiving an input signal from an external device; and
switching the first input window to a second input window including one or more recommended keywords.
